# EUROPEAN PATENT SPECIFICATION

(11) **EP 3 995 421 B1**
(45) Date of publication and mention of the grant of the patent: **28.08.2024**
(21) Application number: 21207144.3
(22) Date of filing: 09.11.2021
(51) Int. Cl.: B65G 47/86, B67C 7/00

(54) **BOTTLE CONVEYOR SYSTEM**
FLASCHENFÖRDERSYSTEM
SYSTÈME DE TRANSPORT DE BOUTEILLES

(30) Priority: 09.11.2020 JP 2020186469
(43) Date of publication of application: 11.05.2022
(73) Proprietor: Shibuya Corporation, Ishikawa 920-8681 (JP)
(72) Inventor: Nishide, Yasuto, Kanazawa-shi, Ishikawa, 920-8681 (JP)
(74) Representative: Hoffmann Eitle

(56) References cited:
- JP-A- 2005 029 225
- JP-A- 2006 199 309
- JP-A- 2007 197 021
- JP-B2- 6 003 141
- JP-B2- 6 350 075
- KR-B1- 102 006 135

## Description

### BACKGROUND OF THE INVENTION

### 1. Field of the Invention

The present invention relates to a bottle conveyor system for transporting a bottle by gripping the neck of the bottle with a gripper around a flange (support ring) on the neck of the bottle.

### 2. Description of the Related Art

There is known a resin bottle conveyor system that transports a bottle by alternately gripping the upper and lower sides of the bottle flange with grippers, see Japanese Patent Publication No. 6350075. In Japanese Patent Publication No. 6350075, a filling machine and a capping machine perform a filling process and a capping process while gripping the lower side of the bottle flange for carrying the bottle along the circumference of a rotating wheel. An intermediate wheel for transferring the bottle between the filling machine and the capping machine grips the upper side of the bottle flange while carrying the bottle along the circumference of a rotating wheel. The bottle needs to be kept stable in an upright position because liquid could spill out of the bottle if its posture becomes unstable while being transferred by the intermediate wheel. Therefore, in Japanese Patent Publication No. 6350075, a guide 70 is provided above grippers 23 and 24 for maintaining the stable position of the transferring bottle by restricting the upper face of a bead "K" on the bottle by abutting an incline 72 provided on the tip end of the guide 70. Furthermore, in Japanese Patent Publication No. 6350075, the height of the gripper of the intermediate wheel is adjustable because it handles bottles having different axial lengths in a cylindrical portion between the bead and the flange.

JP 2005-029225A discloses an intermediate bottle transfer device including a bottle gripping device. JP 2007-197021A discloses a gripping device including gripping arms. In particular, JP 2005-029225A discloses a conveyor system according to the preamble of claim 1.

### SUMMARY OF THE INVENTION

However, when the gripper of the intermediate wheel of Japanese Patent Publication No. 6350075 handles bottles having different neck diameters or with different forms of beads, it may be difficult to restrict the upper faces of all types of beads "K" by the same guide 70.

One aspect of the present invention is to provide a bottle conveyor system that can stably transport bottles having different neck diameters or with different forms of beads.

According to the present invention, a conveyor system as defined in appended claim 1 is provided and handles a bottle having a neck portion provided with a bead, a cylindrical portion and a flange in this order below a thread is provided. The conveyor system includes an upstream machine that supports the downward-facing side of the flange to transport the bottle along its circumference; an intermediate wheel that receives the bottle from the upstream machine and transports the bottle along its circumference while gripping the neck portion of the bottle to suspend the bottle; a downstream machine that receives the bottle from the intermediate wheel and transports the bottle along its circumference while gripping the downward-facing side of the flange; the intermediate wheel includes a plurality of grippers along its circumference, the gripper grips the neck portion of the bottle by a pair of pivotal gripping members; and the gripper of the intermediate wheel comprises, common contact parts provided on each gripper member that come into contact with the neck portion when the gripper is gripping either of a first bottle or a second bottle, wherein a diameter of the neck portion of the second bottle is larger than that of the first bottle; and a large-diameter bottle contact part that is separated from the neck portion when gripping the first bottle and abuts the neck portion when gripping the second bottle; the common contact parts are configured to engage with a lower surface of the bead and an upper surface of the flange when gripping the first bottle, and with a lower surface of the bead and away from the upper surface of the flange when gripping the second bottle; and the large-diameter bottle contact part is configured to engage with at least the upper surface of the flange when gripping the second bottle; and the thickness of the gripping member at the large-diameter bottle contact part is strictly higher than the thickness of the gripping member at the common contact parts.

The large-diameter bottle contact part may be configured to engage with the lower surface of the bead and the upper surface of the flange when gripping the second bottle.

The large-diameter bottle contact part may be located at a portion of each gripper member that is more inward than the common contact portions, with respect to the intermediate wheel.

The large-diameter bottle contact part may be provided on an abutting member arranged between the pair of gripping members, and is located more inward than the common contact parts of each gripper member, with respect to the intermediate wheel.

### BRIEF DESCRIPTION OF THE DRAWINGS

The objects and advantages of the present invention may be better understood from the following description with references to the accompanying drawings in which:
Fig. 1 is a plan view of a bottle conveyor system of a first embodiment of the present invention;
Fig. 2 is a left half sectional view of the intermediate wheel delivering the bottle from the filler wheel or to the capping wheel;
Fig. 3 is an enlarged plan view of the gripper in which the small-diameter bottle and the large-diameter bottle are gripped by the gripper of the first embodiment;
Fig. 4 is a partial sectional view schematically illustrating the positional relationship between the gripping members of the first embodiment and the small-diameter bottle gripped by the gripper;
Fig. 5 is a partial sectional view schematically illustrating the positional relationship between the gripping members of the first embodiment and the large-diameter bottle gripped by the gripper;
Fig. 6 is an enlarged plan view of the gripper in which the small-diameter bottle and the large-diameter bottle are gripped by the gripper of the second embodiment;
Fig. 7 is a partial sectional view schematically illustrating the positional relationship between the gripping members of the second embodiment and the small-diameter bottle gripped by the gripper; and
Fig. 8 is a partial sectional view schematically illustrating the positional relationship between the gripping members of the second embodiment and the large-diameter bottle gripped by the gripper.

### DESCRIPTION OF THE PREFERRED EMBODIMENTS

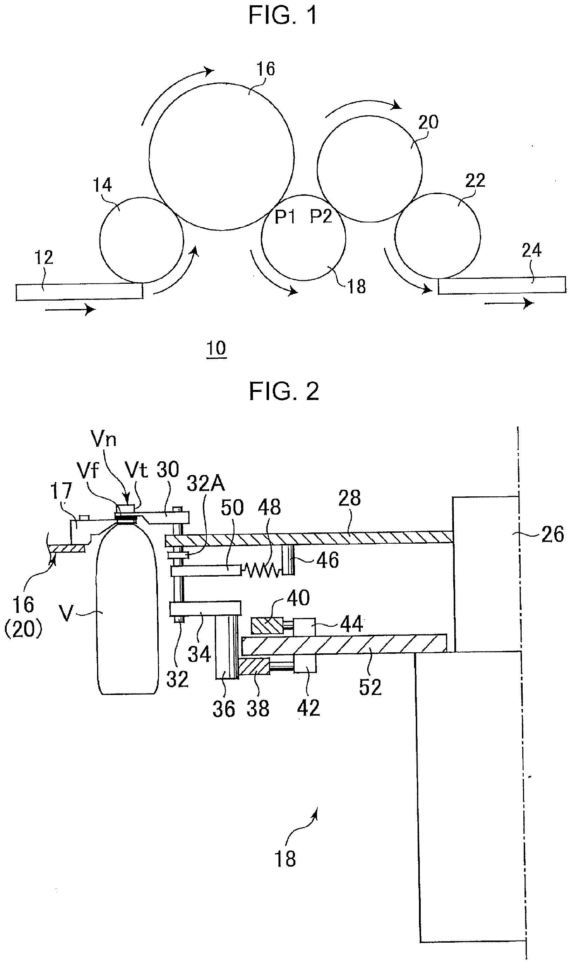

The embodiments of the present invention are described below with references to examples shown in the drawings. Fig. 1 is a plan view of a bottle conveyor system of a first embodiment of the present invention.

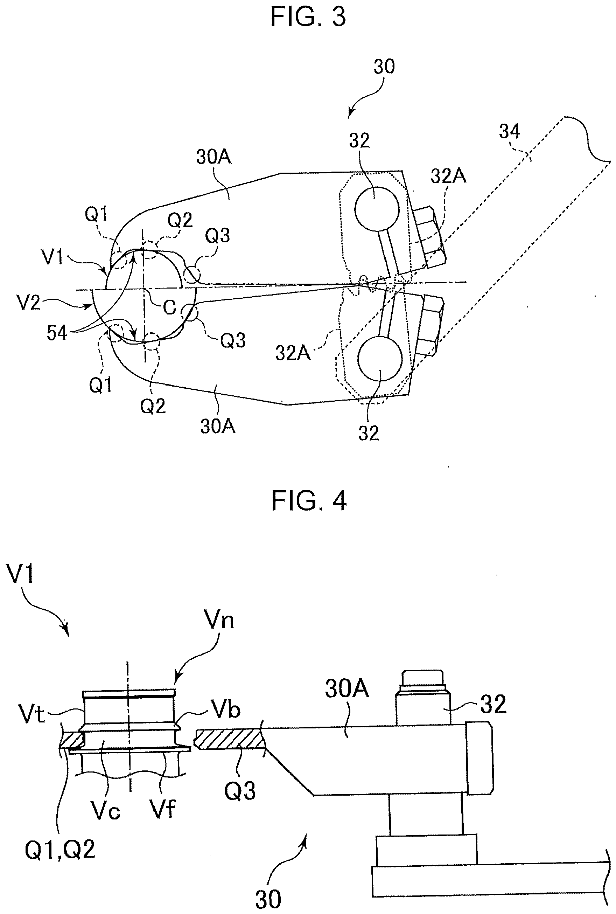

The bottle conveyor system 10 of the first embodiment transports a resin bottle "V" having a neck portion in which a bead "Vb", a cylindrical portion "Vc" and a flange (support ring) "Vf" are provided in this order below a thread "Vt", see Figs. 2 and 4. The bottles "V" are supplied from a supply conveyor 12 in one line and delivered to a filler wheel 16 via a supply wheel 14. Filling liquid is filled into the bottle "V" while the bottle "V" is transported along the circumference of the filling wheel 16 and delivered to a capping wheel 20 via an intermediate wheel 18. The bottle "V" is fitted with a cap while it is transported along the circumference of the capping wheel 20. The capped bottle "V" is delivered to a discharge conveyor 24 via a discharge wheel 22 and discharged.

The filler wheel 16, the intermediate wheel 18 and the capping wheel 20 carry the bottle "V" while gripping the neck of the bottle "V" by a gripper. As illustrated in Fig. 2, a gripper 17 of the filling wheel 16 and the capping wheel 20 grips beneath the flange "Vf" while a gripper 30 of the intermediate wheel 18 grips beneath the bead "Vb", which is on the flange "Vf" side. Incidentally, Fig. 2 illustrates a left half sectional view of the intermediate wheel 18 delivering the bottle "V" from the filling wheel 16 or to the capping wheel 20.

The intermediate wheel 18 includes a disc-shaped rotating wheel 28 supported by a support body 26. The rotating wheel 28 is rotated about the center of the support body 26 by a power source such as a non-illustrated servo motor. A plurality of grippers 30 is provided along the circumference of the rotating wheel 28 at a predetermined interval for holding the necks of the bottles "V". Each gripper 30 is opened and closed via a cam mechanism as described later.

The gripper 30 includes a pair of gripping members 30A. The base ends of the gripping members 30A are attached to a pair of rotating shafts 32. Each rotating shaft 32 is located at the peripheral portion of the rotating wheel 28. Each rotating shaft 32 is provided with a gear 32A and the gears 32A of the paired rotating shafts 32 engage with each other. Thereby, the paired gripping members 30A rotate in the opposite direction about each rotating shaft 32 for opening and closing the gripper 30.

One end of an arm 34 is fixed to a bottom end of one of the paired rotating shafts 32. The other end of the arm 34 is provided with a cam follower 36. The cam follower 36 is engage-able with first and second cams 38 and 40. The first and second cams 38 and 40 are moved forward and backward by respective air cylinders 42 and 44, which are mounted on a non-illustrated support stage.

One end of a spring 48 is connected to the bottom end of a pin 46 that is provided on the rotating wheel 28 and the other end of the spring 48 is connected to one end of a connecting member (arm) 50, of which the other end is fixed to one of the rotating shafts 32. The spring 48 biases the connecting member 50 toward the center of the rotating wheel 28, i.e., in the direction urging the cam follower 36 to the cam surface, so that the gripping members 30A open and close in proportion to the displacement of the cam follower 36. Namely, the gripping members 30A are opened and closed when the cam follower 36 engages either the first cam 38 or the second cam 40.

Similarly, as for the filling machine (upstream machine) and the capping machine (downstream machine), the grippers 17 are also provided along the circumference of the filling wheel 16 and the capping wheel 20 at a predetermined interval. As known in the art, the gripper 17 is configured to grip the bottle, for example, by a cam mechanism or a biasing force of a flat spring and the like.

The first and second cams 38 and 40 are provided underneath the rotating wheel 28 in the vicinity of the filling wheel 16 and the capping wheel 20, namely, in the vicinity of a receiving position "P1" and a delivering position "P2" of the bottle "V". Both the outer peripheral surfaces of the first and second cams 38 and 40 have a shape in which the arc centered on the axis of the rotating wheel 28 is slightly deformed.

A first fixed cam 52 is provided along the conveyance path, from the vicinity of the first and second cams 38 and 40 on the filling wheel 16 side (receiving position "P1" side) to the vicinity of the first and second cams 38 and 40 on the capping wheel 20 side (delivering position "P2" side). The first fixed cam 52 is an arcuate plate member centered on the axis of the rotating wheel 28. When the cam follower 36 engages with the first fixed cam 52, the cam follower 36 is relatively displaced inward in the radial direction so that the gripper 30 is kept in the closed state.

On the other hand, a second fixed cam (not shown) is provided along the conveyance path from the vicinity of the first and second cams 38 and 40 on the capping wheel 20 side (delivering position "P2" side) to the vicinity of the first and second cams 38 and 40 on the filling wheel 16 side (receiving position "P1" side) . The second fixed cam is also an arcuate plate member centered on the axis of the rotating wheel 28, and its outer diameter is larger than that of the first fixed cam 52. When the cam follower 36 engages with the second fixed cam, the cam follower 36 is displaced radially outward so that the gripper 30 is kept in the open state.

The first and second cams 38 and 40 are selectively translated to the position where either of cams 38 and 40 engage with the cam follower 36. The first cam 38 is used when transporting a small-diameter bottle (first bottle) "V1" having a relatively small-diameter neck, and the second cam 40 is used when transporting a large-diameter bottle (second bottle) "V2" having a relatively large-diameter neck. Namely, when the small diameter bottle "V1" is conveyed, the first cam 38 is located at the forward position and the second cam 40 is located in the retracted position. On the other hand, when the large diameter bottle "V2" is conveyed, the first cam 38 is located at the retracted position and the second cam 40 is located at the forward position.

When the first cam 38 or the second cam 40 is in the forward position, the outer peripheral surface of the advanced cam (38 or 40) is smoothly connected to the outer peripheral surfaces of the first fixed cam 52 and the second fixed cam. Since the outer diameter of the second fixed cam is larger than the outer diameter of the first fixed cam 52, the outer diameters of the upstream ends of the first cam 38 and the second cam 40 at the receiving position "P1" side have the same outer diameter as the second fixed cam when they are in the forward position. The outer diameters of the first and second cams 38 and 40 smoothly recess toward the downstream side from the outer diameter of the first fixed cam 52, and then become equal to the outer diameter of the first fixed cam 52 at the downstream end. When the cam follower 36 is moved along this curved surface, the gripper 30 is closed in a timing adjusted to the small diameter bottle "V1" or the large diameter bottle "V2".

On the other hand, the outer diameters of the upstream ends of the first cam 38 and the second cam 40 at the delivery position "P2" side have the same outer diameter as the first fixed cam 52 when they are in the forward position. The outer diameter of the cam smoothly increases to be slightly larger than the outer diameter of the second fixed cam as it transitions toward the downstream side. Then it becomes equal to the outer diameter of the second fixed cam at the downstream end. When the cam follower 36 is moved along this curved surface, the gripper 30 is opened in a timing adjusted to the small-diameter bottle "V1" or the large-diameter bottle "V2".

Furthermore, since the gripper 17 of the filling machine or the capping machine engages with the lower surface of the flange "Vf" of the small-diameter bottle "V1" and the large-diameter bottle "V2" to hold the bottles "V1" and "V2", the height of the lower surface of the flange "Vf" serves as a reference during the conveyance by the filling machine and the capping machine. On the other hand, the gripper 30 of the intermediate wheel 18 engages with the lower outer peripheral portion of the bead "Vb" of the bottles "V1" and "V2" to hold the bottles "V1" and "V2. The small-diameter bottle "V1" and the large-diameter bottle "V2" also have different lengths for the cylindrical portions "Vc" between the flange "Vf" and the bead "Vb". Therefore, it is necessary to adjust the relative heights of the gripper 17 and the gripper 30 depending on whether the small-diameter bottle "V1" or the large-diameter bottle "V2" is handled.

Generally, the length of the cylindrical portion "Vc" is greater for the large-diameter bottle "V2". Therefore, when transporting the large-diameter bottle "V2", it is necessary to make the height of the gripper 30 of the intermediate wheel 18 relative to the gripper 17 higher than when transporting the small-diameter bottle "V1". In the present embodiment, the height of the rotating wheel 28 of the intermediate wheel 18 is adjusted according to the type of the bottle that is handled so that the difference in the length of the cylindrical portion "Vc" is dealt with accordingly. For example, the gripper 30, the rotating shaft 32, the cam follower 36, and so on are lifted and lowered by a lifting mechanism described in Japanese Patent Publication No. 6350075. Namely, they are lifted and lowered integrally with the rotating wheel 28 according to the length of the cylindrical portion "Vc". Thereby, the height of the gripper 30 with respect to the gripper 17 is adjusted.

Fig. 3 is an enlarged plan view of the gripper 30 in which the small-diameter bottle "V1" and the large-diameter bottle "V2" are gripped by the gripper 30 of the first embodiment. The upper half shows the state when the neck of the small-diameter bottle "V1" is gripped, and the lower half shows the state when the neck of the large-diameter bottle "V2" is gripped.

As illustrated in Fig. 3, the base end portions of the gripping members 30A are attached to the rotating shafts 32, respectively. The rotating shafts 32 are rotated by the same angle in opposite directions due to the engagement of the pair of gears 32A. The pair of gripping members 30A are configured symmetrically, and a recessed portion 54 for gripping the neck portion "Vn" of the bottle "V" ("V1" or "V2") is provided inside the tip portion of each gripping member 30A so that the recessed portions 54 face each other.

The profile of the recessed portions 54 is formed so that the center of the neck portion of the small-diameter bottle "V1" or the large-diameter bottle "V2", which is held by the gripping members 30A, is substantially located at the same position "C" within the space between the recessed portions 54. Each recessed portion 54 engages with the small diameter bottle "V1" at two parts (common contact parts) "Q1" and "Q2" on the tip side. On the other hand, each recessed portion 54 is engaged with the large-diameter bottle "V2" at three parts including the common contact parts "Q1" and "Q2" and a part (large-diameter bottle contact part) "Q3" on the base end side. Namely, the pair of gripping members 30A holds the small-diameter bottle "V1" at four parts (4 contact parts) and the large-diameter bottle "V2" at 6 parts (6 contact parts).

With respect to the center position "C", the common contact part "Q1" is located on the tip side and the common contact part "Q2" is located slightly on the base side. Namely, the center position "C" is located inside a quadrangle defined by segments connecting four common contact parts Q1-Q2-Q2-Q1. When the gripper 30 is closed, the small-diameter bottle "V1" is stably gripped by these four part only. The large-diameter bottle contact part "Q3" is located in the position nearest the base of the recessed portion 54, and as described above, the large-diameter bottle "V2" is stably gripped by six contact parts, i.e., four common contact parts "Q1" and "Q2" plus two additional large-diameter bottle contact parts "Q3" when the gripper 30 is closed.

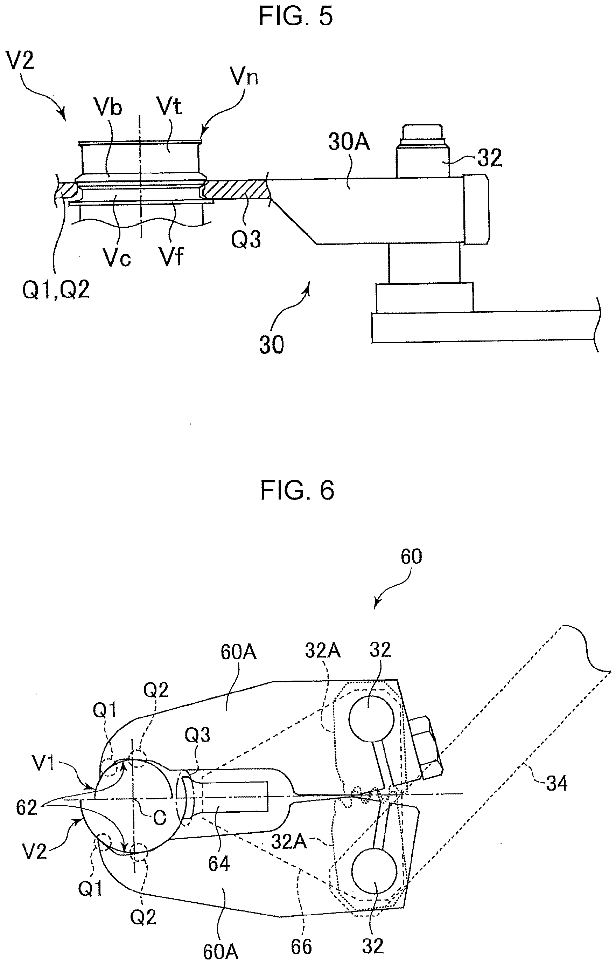

Figs. 4 and 5 are partial sectional views schematically illustrating the positional relationship between the gripping members 30A and the small-diameter bottle "V1" gripped by the gripper 30 and the positional relationship between the gripping members 30A and the large-diameter bottle "V2" gripped by the gripper 30. In Figs. 4 and 5, the side surfaces of the neck portion "Vn" of the small-diameter bottle "V1" and the large-diameter bottle "V2", and the cross sections at the common contact parts "Q1" and "Q2" and the large-diameter bottle contact part "Q3" are schematically illustrated.

As illustrated in Fig. 4, the thickness of the gripping member 30A at the common contact parts "Q1" and "Q2" is substantially equal to the height of the cylindrical portion "Vc" of the small diameter bottle V1. That is, when the small-diameter bottle "V1" is gripped by the gripper 30, the gripping members 30A fit snugly between the upper surface of the flange "Vf" and the lower surface of the bead "Vb" at the common contact parts "Q1" and "Q2". Thereby, the alignment of the center axis of the small-diameter bottle "V1" gripped by the gripper 30 is maintained and prevented from swinging. Accordingly, even a small-diameter bottle "V1" filled with content by the filling machine can be conveyed in a stable state.

As shown in Fig. 5, since the length of the cylindrical portion "Vc" of the large-diameter bottle "V2" is longer than the length of the cylindrical portion "Vc" of the small-diameter bottle "V1", the thickness of the gripping member 30A at the common contact parts Q1 and Q2 is thinner than the length of the cylindrical portion "Vc" of the large-diameter bottle V2. Therefore, when the gripper 30 grips the large-diameter bottle "V2", the common contact parts "Q1" and "Q2" of the gripping members 30A engage only with the lower surface of the bead "Vb" and are separated from the flange "Vf". As a result, although the common contact parts "Q1" and "Q2" engage with the bead "Vb" to suspend the large-diameter bottle "V2", it is not sufficient to prevent the large-diameter bottle "V2" from swinging.

However, when the large-diameter bottle "V2" is gripped by the gripper 30 of the present embodiment, the large-diameter bottle contact parts "Q3" engage with the neck portion "Vn", as illustrated in Fig. 5. Furthermore, the thickness of the gripping member 30A at the large-diameter bottle contact parts "Q3" is substantially equal to, for example, the length of the cylindrical portion "Vc" of the large-diameter bottle "V2". Therefore, when the large-diameter bottle "V2" is gripped by the gripper 30, the large-diameter bottle contact parts "Q3" of the gripping members 30A fit snugly in between the upper surface of the flange "Vf" and the lower surface of the bead "Vb". Thereby, the axis of the large-diameter bottle "V2" held by the grippers 30 is prevented from swinging, and even the large-diameter bottle "V2" filled with content from the filling machine can be conveyed in a stable state.

As described above, according to the bottle conveyor system using the gripper of the first embodiment, the bottles having different neck dimensions such as diameter can be transported stably. Even when the large-diameter bottle contact parts come into contact with only the lower surface of the bead "Vb" when gripping the bottle, stable transportation may be possible since a sufficient number of contact parts are provided.

Next, with reference to Figs. 6 to 8, the configuration of the gripper of the intermediate wheel of the second embodiment will be described. Note that Figs. 6, 7, and 8 correspond to Figs. 3, 4, and 5 of the first embodiment. The only difference from the first embodiment is the configuration of the large-diameter bottle contact part of the gripper of the intermediate wheel; the other configurations are the same as those of the first embodiment. The same reference numerals are used for similar configurations, and the descriptions thereof will be omitted.

The gripper 60 of the second embodiment of the intermediate wheel 18 includes a pair of symmetrical gripping members 60A. A recessed portion 62 for gripping the neck portion "Vn" of the bottle "V" ("V1" or "V2") is provided inside the tip portion of each gripping member 60A so that the recessed portions 62 face each other. Although, the recessed portion 54 of the first embodiment includes the common contact parts "Q1" and "Q2" and the large-diameter bottle contact parts "Q3", the recessed portion 62 of the second embodiment includes only the common contact parts "Q1" and "Q2".

As shown in Fig. 6, the gripper 60 of the second embodiment is provided with an abutting member 64 located on the base side in between the gripping members 60A at the same height as the gripping members 60A, the abutting member 64 engages with the neck portion "Vn" of the large-diameter bottle "V2". The abutting member 64 is arranged along the symmetric axis of the gripping members 60A and projects outward to a position where its tip encounters the neck "Vn" of the gripped large-diameter bottle "V2". Furthermore, the abutting member 64 is attached to the bracket 66, and the bracket 66 is supported by a pair of rotating shafts 32, which are rotatable with respect to the bracket 66.

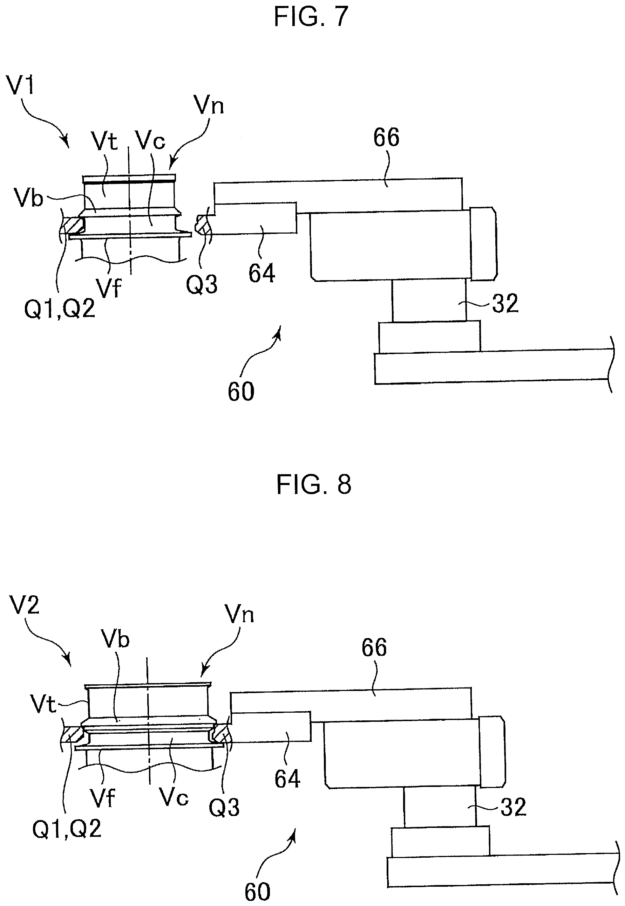

When the gripper 60 grips the small diameter bottle "V1", the bottle "V1" is gripped only by the common contact parts "Q1" and "Q2" as in the first embodiment. As shown in Fig. 7, the thickness of the gripping member 60A at the common contact parts "Q1" and "Q2" of the second embodiment is substantially equal to the length of the cylindrical portion "Vc" of the small diameter bottle "V1". As a result, the small-diameter bottle "V1" is securely held by the gripper 60 as in the first embodiment.

On the other hand, when the gripper 60 grips the large-diameter bottle "V2", the neck portion "Vn" of the large-diameter bottle "V2" engages not only with the common contact parts "Q1" and "Q2" but also with the tip end of the abutting member 64. As illustrated in Fig. 6, the tip end of the abutting member 64 is formed in an arc shape that closely fits with the outer circumference of the neck portion "Vn" of the large-diameter bottle "V2" to provide the large-diameter bottle contact part "Q3". The thickness of the abutting member 64 at the large-diameter bottle contact part "Q3" corresponds to the cylindrical portion "Vc" of the large-diameter bottle "V2", as in the first embodiment. Namely, when the large-diameter bottle "V2" is gripped by the gripper 60, the large-diameter bottle contact part Q3 of the abutting member 64 abuts the upper surface of the flange "Vf" and the lower surface of the bead "Vb", and fits snugly between them. However, the large-diameter bottle contact part "Q3" may also be configured to make contact with only the lower surface of the bead "Vb". At this time, the large-diameter bottle "V2" is held at a total of five locations, four common contact parts "Q1", "Q2" and one large-diameter bottle contact part "Q3".

As described above, the same effect as that of the first embodiment can be obtained by the gripper of the second embodiment.

Although, in the present embodiment, the common contact parts are provided in two places on each gripper member, they can also be provided in three or more places. The number of large-diameter bottle contact parts may be 2 or more. Furthermore, the abutting member of the second embodiment can be combined with the gripper of the first embodiment.

As described above, according to the capping machine of the present embodiment, it is possible to suppress the occurrence of damage to the vessel while easily handling vessels having different diameters.

## Claims

1. A conveyor system (10) adapted to handle a bottle (V) having a neck portion provided with a bead (Vb), a cylindrical portion (Vc) and a flange (Vf) in this order below a thread (Vt), the conveyor system (10) comprising:
an upstream machine adapted to support the downward-facing side of the flange (Vf) to transport the bottle (V) along its circumference;
an intermediate wheel (18) adapted to receive the bottle (V) from the upstream machine and transports the bottle (V) along its circumference while gripping the neck portion of the bottle (V) to suspend the bottle (V);
a downstream machine adapted to receive the bottle (V) from the intermediate wheel (18) and to transport the bottle (V) along its circumference while gripping the downward-facing side of the flange (Vf);
the intermediate wheel (18) includes a plurality of grippers (30, 60) along its circumference, the gripper (30, 60) being adapted to grip the neck portion of the bottle (V) by a pair of pivotal gripping members (30A, 60A); and
the gripper (30, 60) of the intermediate wheel (18) comprises,
common contact parts (Q1, Q2) provided on each gripper member (30A, 60A) and adapted to come into contact with the neck portion when the gripper (30, 60) is gripping either of a first bottle (V1) or a second bottle (V2), wherein a diameter of the neck portion of the second bottle (V2) is larger than that of the first bottle (V1); and
a large-diameter bottle contact part (Q3) adapted to be separated from the neck portion when gripping the first bottle (V1) and to abut the neck portion when gripping the second bottle (V2);
the common contact parts (Q1, Q2) are configured to engage with a lower surface of the bead (Vb) and an upper surface of the flange (Vf) when gripping the first bottle (V1);
the large-diameter bottle contact part (Q3) is configured to engage with at least the upper surface of the flange (Vf) when gripping the second bottle (V2);
said conveyor system being **characterised in that**
the thickness of the gripping member (30A, 60A) at the large-diameter bottle contact part (Q3) is strictly higher than the thickness of the gripping member (30A, 60A) at the common contact parts (Q1, Q2) and **in that** the common contact parts (Q1, Q2) are configured to engage with a lower surface of the bead (Vb) and configured to be away from the upper surface of the flange (Vf) when gripping the second bottle (V2).

2. The conveyor system (10) according to claim 1, wherein the large-diameter bottle contact part (Q3) is configured to engage with the lower surface of the bead (Vb) and the upper surface of the flange (Vf) when gripping the second bottle (V2).

3. The conveyor system (10) according to claim 1, wherein the large-diameter bottle contact part (Q3) is located at a more inward portion of each gripper member (30, 60) than the common contact portions (Q1, Q2), with respect to the intermediate wheel (18).

4. The conveyor system (10) according to claim 1, wherein the large-diameter bottle contact part (Q3) is provided on an abutting member (64) arranged between the pair of gripping members (60A), and is located more inward than the common contact parts (Q1, Q2) of each gripper member (60A), with respect to the intermediate wheel (18).

## Patentansprüche

1. Fördersystem (10) zur Handhabung einer Flasche (V) mit einem Halsabschnitt, der mit einem Wulst (Vb), einem zylindrischen Abschnitt (Vc) und einem Flansch (Vf) in dieser Reihenfolge unter einem Gewinde (Vt) versehen ist, das Fördersystem (10) umfassend:
eine vorgelagerte Maschine, die geeignet ist, die nach unten gerichtete Seite des Flansches (Vf) zu stützen, um die Flasche (V) entlang ihres Umfangs zu transportieren;
ein Zwischenrad (18), das die Flasche (V) von der vorgelagerten Maschine aufnehmen kann und die Flasche (V) entlang ihres Umfangs transportiert, während es den Halsbereich der Flasche (V) ergreift, um die Flasche (V) aufzuhängen;
eine nachgeschaltete Maschine, die angepasst ist, die Flasche (V) von dem Zwischenrad (18) aufzunehmen und die Flasche (V) entlang ihres Umfangs zu transportieren, während sie die nach unten weisende Seite des Flansches (Vf) ergreift;
wobei das Zwischenrad (18) eine Vielzahl von Greifern (30, 60) entlang seines Umfangs einschließt, wobei der Greifer (30, 60) angepasst ist, den Halsabschnitt der Flasche (V) durch ein Paar von schwenkbaren Greifelementen (30A, 60A) zu greifen; und
wobei der Greifer (30, 60) des Zwischenrades (18) umfasst,
gemeinsame Kontaktteile (Q1, Q2), die an jedem Greiferelement (30A, 60A) vorgesehen sind und angepasst sind, mit dem Halsabschnitt in Kontakt zu kommen, wenn der Greifer (30, 60) entweder eine erste Flasche (V1) oder eine zweite Flasche (V2) ergreift, wobei ein Durchmesser des Halsabschnitts der zweiten Flasche (V2) größer ist als der der ersten Flasche (V1); und
ein Flaschenkontaktteil (Q3) mit großem Durchmesser, das angepasst ist, beim Ergreifen der ersten Flasche (V1) von dem Halsabschnitt getrennt zu werden und beim Ergreifen der zweiten Flasche (V2) an dem Halsabschnitt anzuliegen;
wobei die gemeinsamen Kontaktteile (Q1, Q2) konfiguriert sind, um beim Greifen der ersten Flasche (V1) mit einer unteren Fläche des Wulstes (Vb) und einer oberen Fläche des Flansches (Vf) in Eingriff zu kommen;
wobei das Flaschenkontaktteil (Q3) mit großem Durchmesser konfiguriert ist, beim Ergreifen der zweiten Flasche (V2) mit mindestens der oberen Fläche des Flansches (Vf) in Eingriff zu kommen;
wobei das Fördersystem **dadurch charakterisiert ist, dass**
die Dicke des Greifelements (30A, 60A) an dem Flaschenkontaktteil (Q3) mit großem Durchmesser strikt höher ist als die Dicke des Greifelements (30A, 60A) an den gemeinsamen Kontaktteilen (Q1, Q2) und dass die gemeinsamen Kontaktteile (Q1, Q2) konfiguriert sind, um mit einer unteren Fläche des Wulstes (Vb) in Eingriff zu kommen und konfiguriert sind, um beim Ergreifen der zweiten Flasche (V2) von der oberen Fläche des Flansches (Vf) entfernt zu sein.

2. Fördersystem (10) nach Anspruch 1, wobei das Flaschenkontaktteil (Q3) mit großem Durchmesser konfiguriert ist, um beim Ergeifen der zweiten Flasche (V2) mit der Unterseite des Wulstes (Vb) und der Oberseite des Flansches (Vf) in Eingriff zu kommen.

3. Fördersystem (10) nach Anspruch 1, wobei das Flaschenkontaktteil (Q3) mit großem Durchmesser an einem weiter innen liegenden Abschnitt jedes Greiferelements (30, 60) als die gemeinsamen Kontaktabschnitte (Q1, Q2) in Bezug auf das Zwischenrad (18) angeordnet ist.

4. Fördersystem (10) nach Anspruch 1, wobei das Flaschenkontaktteil (Q3) mit großem Durchmesser an einem Anschlagelement (64) vorgesehen ist, das zwischen dem Paar von Greifelementen (60A) angeordnet ist, und in Bezug auf das Zwischenrad (18) weiter innen angeordnet ist als die gemeinsamen Kontaktteile (Q1, Q2) eines jeden Greifelements (60A).

## Revendications

1. Système de transport (10) apte à manipuler une bouteille (V) présentant une partie de goulot pourvue d'un bourrelet (Vb), d'une partie cylindrique (Vc) et d'une bride (Vf) dans cet ordre en dessous d'un filetage (Vt), le système de transport (10) comprenant :
une machine amont apte à supporter le côté orienté vers le bas de la bride (Vf) afin de transporter la bouteille (V) le long de sa circonférence ;
une roue intermédiaire (18) apte à recevoir la bouteille (V) de la machine amont et à transporter la bouteille (V) le long de sa circonférence tout en saisissant la partie de goulot de la bouteille (V) afin de suspendre la bouteille (V) ;
une machine aval apte à recevoir la bouteille (V) en provenance de la roue intermédiaire (18) et à transporter la bouteille (V) le long de sa circonférence tout en saisissant le côté orienté vers le bas de la bride (Vf) ;
la roue intermédiaire (18) inclut une pluralité de pinces (30, 60) le long de sa circonférence, la pince (30, 60) étant apte à saisir la partie de goulot de la bouteille (V) par une paire d'éléments de saisie (30A, 60A) pivotants ; et
la pince (30, 60) de la roue intermédiaire (18) comprend,
des parties de contact communes (Q1, Q2) prévues sur chaque élément de saisie (30A, 60A) et aptes à entrer en contact avec la partie de goulot lorsque la pince (30, 60) saisit une première bouteille (V1) ou une deuxième bouteille (V2), dans lequel un diamètre de la partie de goulot de la deuxième bouteille (V2) est plus grand que celui de la première bouteille (V1) ; et
une partie de contact de grand diamètre (Q3) apte à être séparée de la partie de goulot lors de la saisie de la première bouteille (V1) et à buter sur la partie de goulot lors de la saisie de la deuxième bouteille (V2) ;
les parties de contact communes (Q1, Q2) sont configurées pour s'engager avec une surface inférieure du bourrelet (Vb) et une surface supérieure de la bride (Vf) lors de la saisie de la première bouteille (V1) ;
la partie de contact de bouteille de grand diamètre (Q3) est configurée pour s'engager avec au moins la surface supérieure de la bride (Vf) lors de la saisie de la deuxième bouteille (V2) ;
ledit système de transport étant **caractérisé en ce que**
l'épaisseur de l'élément de saisie (30A, 60A) au niveau de la partie de contact de bouteille de grand diamètre (Q3) est strictement supérieure à l'épaisseur de l'élément de saisie (30A, 60A) au niveau des parties de contact communes (Q1, Q2) et **en ce que** les parties de contact communes (Q1, Q2) sont configurées pour s'engager avec une surface inférieure du bourrelet (Vb) et configurées pour être éloignées de la surface supérieure de la bride (Vf) lors de la saisie de la deuxième bouteille (V2).

2. Système de transport (10) selon la revendication 1, dans lequel la partie de contact de bouteille de grand diamètre (Q3) est configurée pour s'engager avec la surface inférieure du bourrelet (Vb) et la surface supérieure de la bride (Vf) lors de la saisie de la deuxième bouteille (V2).

3. Système de transport (10) selon la revendication 1, dans lequel la partie de contact de bouteille de grand diamètre (Q3) est située à une partie plus intérieure de chaque élément de saisie (30, 60) que les parties de contact communes (Q1, Q2), par rapport à la roue intermédiaire (18).

4. Système de transport (10) selon la revendication 1, dans lequel la partie de contact de bouteille de grand diamètre (Q3) est prévue sur un élément de butée (64) agencé entre la paire d'éléments de saisie (60A), et est située plus à l'intérieur que les parties de contact communes (Q1, Q2) de chaque élément de saisie (60A), par rapport à la roue intermédiaire (18).
